# EUROPEAN PATENT APPLICATION

(11) **EP 3 923 459 A1**
(43) Date of publication of application: **15.12.2021**
(21) Application number: 20178812.2
(22) Date of filing: 08.06.2020
(51) Int. Cl.: H02M 7/219, H02N 2/18

(54) **RECTIFIER FOR PIEZOELECTRIC ENERGY HARVESTING, PIEZOELECTRIC ENERGY HARVESTER AND ASSOCIATED METHOD**

(71) Applicant: Université de Strasbourg, 67081 Strasbourg cedex (FR); CENTRE NATIONAL DE LA RECHERCHE SCIENTIFIQUE, 75794 Paris Cedex 16 (FR)
(72) Inventor: FRICK, Vincent, 67100 Strasbourg (FR)
(74) Representative: Cabinet Camus Lebkiri

(57) **Abstract**

According to an aspect of the invention, it is provided a rectifier (101) for piezoelectric energy harvesting, comprising:
- an active diode (AD);
- a first switch (SWo);
- a second switch (SW₁) connected to the first switch (SW₀) and:
∘ to the active diode (AD) in a charging position;
∘ to the ground in a discharging position;

- a third switch (SW₂) connected to the first switch (SW₀) and:
∘ to the active diode (AD) in a charging position;
∘ to the ground in a discharging position;

- a regulator circuit (REG) connected to the active diode (AD);
- either a fourth switch (SW₃) connected in parallel with the active diode (AD) and the regulator circuit (REG);
- or:
∘ a recycling switch connected to the active diode (AD);
∘ a recycling capacity connected to the recycling switch and to the ground; and
∘ a fourth switch (SW₃) connected to the third switch (SW₂) and to the recycling capacity;

- a control circuit configured to control the position of the switches (SWo, SW₁, SW₂, SW₃).

## Description

### TECHNICAL FIELD

The technical field of the invention is the one of piezoelectric energy harvesters and more particularly, the one of rectifiers for piezoelectric energy harvesters.

The present invention concerns a rectifier for piezoelectric energy harvester. The present invention also relates to a piezoelectric energy harvester and to a method for harvesting piezoelectric energy.

### BACKGROUND OF THE INVENTION

With the recent advent of loT (for Internet of Things), there has been a dramatically increasing need for portable, self-powered and lightweight devices. Batteries are the most common power solutions for many embedded applications. However, given their size, weight and impractical replacement, in addition to limited lifetime, they become undesirable in ultra-compact ultra-low power applications.

A lot of research work has been done over the last years on energy harvesting, and especially on piezoelectric energy harvesters because of their relative high-power density and high output voltage, their compatibility with conventional integrated circuit technologies and the wide availability of ambient vibration sources.

A piezoelectric energy harvester converts mechanical energy from a vibration source into electrical energy thanks to the direct piezoelectric effect of a piezoelectric element, and stores the harvested energy in a storage element, usually a storage capacitor.

The equivalent electromechanical model of a piezoelectric element consists of a dependent current source, which provides a current proportional to the input vibration amplitude, in parallel with an inherent piezoelectric capacitor.

However, the energy provided by the piezoelectric element cannot be used directly to power an electronic load since the provided current is alternative. An interface circuit is therefore necessary to rectify the generated voltage across the piezoelectric element and to provide stable power supply.

A standard interface circuit is a full-bridge rectifier comprising rectifying diodes. Yet, high voltage drops across the rectifying diodes and the inherent piezoelectric capacitor dramatically reduce the power extracted from the piezoelectric element and are not suitable for low-voltage piezoelectric elements, i.e. with a generated voltage around 1V or below.

In order to increase the power efficiency, the principle of active rectification has been proposed. It includes a negative voltage converter in series with an active diode. The rectification process of the negative voltage converter is equivalent to a full-bridge rectifier but uses PMOS and NMOS switches instead of diodes in order to have lower voltage drops, and the active diode is required to prevent the current from flowing back from the storage capacitor to the piezoelectric element. Yet, the need to charge and discharge the inherent piezoelectric capacitor still limits the energy extraction.

Different topologies of either synchronized switch harvesting on inductors or synchronized switch harvesting on capacitors interface circuits combined to a rectifier have been proposed to reduce the losses due to the inherent piezoelectric capacitor and improve power efficiency.

However, large inductors, that have an inductance as large as 10 mH or higher, with high quality factor are required in synchronized switch harvesting on inductor topologies to reach acceptable extracted power. They are thus not suitable for on-chip system implementation and require specific complex tuning with the piezoelectric element.

As for synchronized switch harvesting on capacitors interface circuits, a large number of switched capacitors is needed to achieve high power efficiency. This increases the volume of the interface circuit and more pointedly its control complexity, as well as the time needed for the rectification of the generated voltage across the piezoelectric element which requires between 17 and 21 steps, typically of the order of 120 microseconds.

There is therefore a need for a rectifier embeddable in a piezoelectric energy harvester, having a high power efficiency, that is at least superior to the one of the full-bridge rectifier, and rectifying the voltage across the piezoelectric element in a reduced time, that is of the order of 5 microseconds, with a small number of steps, that is of the order of three steps.

### SUMMARY OF THE INVENTION

An object of the invention is to provide a rectifier for piezoelectric energy harvesting with a high extracted power and a reduced rectification time.

To this end, according to a first aspect of the invention, it is provided a rectifier for piezoelectric energy harvesting, comprising:
- an active diode having a first terminal and a second terminal;
- a first switch having a first terminal and a second terminal;
- a second switch having a first terminal, a second terminal and a third terminal, the first terminal of the second switch being connected to the first terminal of the first switch, the second terminal of the second switch being connected to the ground and the third terminal of the second switch being connected to the first terminal of the active diode, the first terminal of the second switch being connected to the third terminal of the second switch in a charging position and the first terminal of the second switch being connected to the second terminal of the second switch in a discharging position;
- a third switch having a first terminal, a second terminal and a third terminal, the first terminal of the third switch being connected to the second terminal of the first switch, the second terminal of the third switch being connected to the ground and the third terminal of the third switch being connected to the first terminal of the active diode, the first terminal of the third switch being connected to the third terminal of the third switch in a charging position and the first terminal of the third switch being connected to the second terminal of the third switch in a discharging position;
- a regulator circuit having a first terminal and a second terminal, the first terminal of the regulator circuit being connected to the second terminal of the active diode;
- either a fourth switch having a first terminal and a second terminal, the first terminal of the fourth switch being connected to the first terminal of the active diode and the second terminal of the fourth switch being connected to the second terminal of the regulator circuit;
- or:
   ∘ a recycling switch having a first terminal and a second terminal, the second terminal of the recycling switch being connected to the second terminal of the active diode;
   ∘ a recycling capacity having a first terminal and a second terminal, the first terminal of the recycling capacity being connected to the first terminal of the recycling switch and the second terminal of the recycling capacity being connected to the ground; and
   ∘ a fourth switch having a first terminal and a second terminal, the first terminal of the fourth switch being connected to the third terminal of the third switch and the second terminal of the fourth switch being connected to the first terminal of the recycling capacity;
- a control circuit configured to control the position of the first switch, the second switch, the third switch and the fourth switch.
Thanks to the invention, it is possible to rectify the voltage across a piezoelectric element connected in parallel with the first switch and to store the rectified voltage in a storage capacitor connected to the second terminal of the regulator circuit, by modifying the position of the switches via the control circuit. The invention uses the principle of active rectification that needs to charge and discharge the inherent piezoelectric capacitor. To improve the power efficiency, the inherent piezoelectric capacitor is discharged at each zero-crossing moment of the current produced by the piezoelectric element, and then immediately recharged with a fraction of the charge from the storage capacitor in a first embodiment or with a fraction of the charge from the recycling capacitor in a second embodiment. As the value of the capacitance of the storage capacitor and of the recycling capacitor are at least one order of magnitude larger than the capacitance of the inherent piezoelectric capacitor, the recharging level is maximum and therefore only a few steps are needed to recharge the inherent piezoelectric capacity. Consequently, the recharging of the inherent piezoelectric capacitor is almost instantaneous, and the rectification time is then approximately equal to 5 microseconds.

Apart from the characteristics mentioned above in the previous paragraph, the rectifier according to the invention may have one or several complementary characteristics among the following characteristics considered individually or in any technically possible combinations.

According to a variant, the active diode comprises:
- an active diode switch having a first terminal and a second terminal being each connected to one different terminal of the active diode;
- a comparator having:
   ∘ an inverting input connected to the second terminal of the active diode;
   ∘ a non-inverting input connected to the first terminal of the active diode; and
   ∘ an output connected to the control circuit;
the control circuit being configured to open the active diode switch when the voltage at the non-inverting input of the comparator is superior to the voltage at the inverting input of the comparator and to close the active diode switch when the voltage at the non-inverting input of the comparator is inferior or equal to the voltage at the inverting input of the comparator.
The active diode is thus able to prevent current backflow from the storage capacitor as in the state of the art, but also to detect the zero-crossing moments of the current produced by the piezoelectric element. Indeed, the comparator compares the voltage at the first terminal of the active diode, that is the voltage across the piezoelectric element, and the voltage at the second terminal of the active diode, that is the voltage across the regulator circuit and therefore across the storage capacitor. When the voltage across the piezoelectric element becomes superior to the voltage across the storage capacitor, the voltage at the output of the comparator increases. Consequently, the moment when the voltage at the output of the comparator goes high corresponds to the moment when the current produced by the piezoelectric element changes direction, i.e. zero crossing. At this moment, the control circuit connected to the output of the comparator opens the active diode switch to prevent current backflow from the storage capacitor.

According to a variant compatible with the preceding variant, the first terminal of the regulator circuit is connected to the second terminal of the regulator circuit and the regulator circuit comprises:
- a regulator switch having a first terminal and a second terminal, the first terminal of the regulator switch being connected to the first terminal of the regulator circuit and the second terminal of the regulator switch being connected to the ground;
- a regulator comparator having:
   ∘ a non-inverting input connected to the second terminal of the regulator circuit;
   ∘ an inverting input connected to a reference voltage supply; and
   ∘ an output configured to close the regulator switch when the voltage at the non-inverting input of the regulator comparator is superior to the voltage at the inverting input of the regulator comparator and to open the regulator switch when the voltage at the non-inverting input of the regulator comparator is inferior or equal to the voltage at the inverting input of the regulator comparator.
The regulator comparator compares the voltage across the storage capacitor and a reference voltage. When the voltage across the storage capacitor becomes superior to the reference voltage, that is the voltage across the storage capacitor is in excess in regards to the reference voltage, the voltage at the output of the regulator comparator increases, which is used to close the regulator switch.

In the first embodiment of the rectifier of the invention, wherein the fourth switch is connected with the active diode via its first terminal and to the regulator circuit via its second terminal, the closing of the regulator switch enables the voltage across the storage capacitor in excess to be dissipated.

According to a sub-variant of the preceding variant, the output of the regulator comparator is configured to close the recycling switch when the voltage at the non-inverting input of the regulator comparator is superior to the voltage at the inverting input of the regulator comparator and to open the recycling switch when the voltage at the non-inverting input of the regulator comparator is inferior or equal to the voltage at the inverting input of the regulator comparator.
When the voltage across the storage capacitor becomes superior to the reference voltage, the increasing voltage at the output of the regulator comparator is thus used to further close the recycling switch comprised in the rectifier according to the second embodiment of the invention. The closing of the recycling switch thus enables the charging of the recycling capacitor with the voltage across the storage capacitor in excess, which further improves power efficiency. Consequently, in the second embodiment, the inherent piezoelectric capacitor is recharged using voltage in excess, and not using voltage in the storage capacitor as in the first embodiment.
According to a second aspect of the invention, it is provided a piezoelectric energy harvester comprising:
- a piezoelectric element configured to convert mechanical energy into electrical energy in the form of an alternating current corresponding to an alternating voltage;
- a rectifier according to the first aspect of the invention, configured to rectify the alternating voltage, the piezoelectric element being connected in parallel with the first switch;
- a storage capacitor configured to store the rectified voltage, having a first terminal and a second terminal, the first terminal of the storage capacitor being connected to the second terminal of the regulator circuit and the second terminal of the storage capacitor being connected to the ground, the regulator circuit configured to regulate the voltage in the storage capacitor;
- a load resistor, having a first terminal and a second terminal, the first terminal of the load resistor being connected to the second terminal of the regulator circuit and the second terminal of the load resistor being connected to the ground.
The rectifier of the invention is thus embeddable in a piezoelectric energy harvester.

According to a variant, the reference voltage is equal to a maximum no-load voltage across the piezoelectric element.
The voltage in the storage capacitor is thus regulated in regard to a reference voltage maximizing power efficiency.

According to a third aspect of the invention, it is provided a method for harvesting piezoelectric energy using the piezoelectric energy harvester according to the second aspect of the invention, comprising the following steps:
- Detect the zero-crossing moments of the current produced by the piezoelectric element;
- When a zero-crossing moment is detected:
   ∘ Via the control circuit, put the second switch and/or the third switch in the discharging position, and close the first switch;
   ∘ At the end of a discharging time, open the first switch and close the fourth switch via the control circuit, and check the sign of the current produced by the piezoelectric element:
      ▪ If the current produced by the piezoelectric element is positive, put the second switch in the charging position via the control circuit;
      ▪ If the current produced by the piezoelectric element is negative, put the third switch in the charging position via the control circuit;
   ∘ At the end of the recharging time, open the fourth switch via the control circuit.

At each zero-crossing moment, the inherent piezoelectric capacitor is discharged by closing the first switch and putting the second switch and the third switch in the discharging position. The inherent piezoelectric capacitor is then recharged by a fraction of charges from the storage capacitor, by closing the fourth switch and placing the second switch or the third switch in the charging position depending on the sign of the current produced by the piezoelectric element. Once the inherent piezoelectric capacitor is recharged, the fourth switch is open to enable charges from the piezoelectric element to be transferred to the storage capacitor.

The invention and its various applications will be better understood by reading the following description and examining the accompanying figures.

### BRIEF DESCRIPTION OF THE FIGURES

The figures are presented for information purposes only and in no way limit the invention.
- Figure 1 schematically represents a piezoelectric energy harvester according to the invention comprising a rectifier according to a first embodiment of the invention.
- Figure 2 schematically represents the piezoelectric energy harvester comprising a rectifier according to a second embodiment of the invention.
- Figure 3 schematically represents an active diode according to one variant of the invention for the rectifier of the invention.
- Figure 4 schematically represents a regulator circuit according to one variant of the invention for the rectifier according to the second embodiment of the invention.
- Figure 5 is a flow chart of a method according to the invention.
- Figure 6 illustrates the current produced by a piezoelectric element according to the invention, the voltage across the piezoelectric element, the voltage across a storage capacitor according to the invention, and the voltage across a first switch, a second switch, a third switch and a fourth switch according to the invention over time, for the piezoelectric energy harvester according to the invention comprising a rectifier according to a first embodiment of the invention.
- Figure 7 schematically represents the piezoelectric energy harvester comprising the rectifier according to the first embodiment of the invention during a second step of the method.
- Figure 8 schematically represents the piezoelectric energy harvester comprising the rectifier according to the first embodiment of the invention during a fourth step of the method.
- Figure 9 schematically represents the piezoelectric energy harvester comprising the rectifier according to the first embodiment of the invention during a fifth step of the method.
- Figure 10 schematically represents the piezoelectric energy harvester comprising the rectifier according to the first embodiment of the invention during a sixth step of the method.

### DETAILED DESCRIPTION OF THE PREFERRED EMBODIMENT

Some embodiments of devices and methods in accordance with embodiments of the present invention are now described, by way of example only, and with reference to the accompanying drawings. The description is to be regarded as illustrative in nature and not as restrictive.

A first aspect of the invention relates to a rectifier for piezoelectric energy harvesting.

By "piezoelectric energy harvesting" is meant the collection of electrical energy produced by a piezoelectric element from mechanical energy, in order to store the electrical energy for future use.

By "piezoelectric element" is meant a material having the property of becoming electrically polarized under the action of a mechanical stress, and in particular under the action of a vibration, known as direct piezoelectric effect.

The piezoelectric element is for example a LZT material (for Lead Zirconate Titanate).

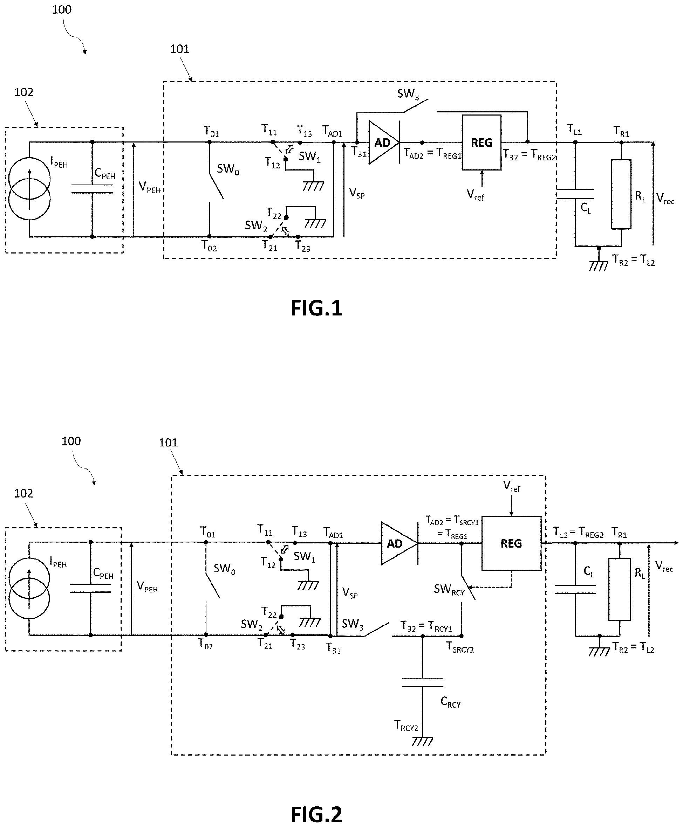

As illustrated in figures 1 and 2, the piezoelectric element 102 can be modeled by a dependent current source providing a current I_{PEH} proportional to the amplitude of the vibration applied to the piezoelectric element 102, in parallel with an inherent piezoelectric capacitor CPEH.

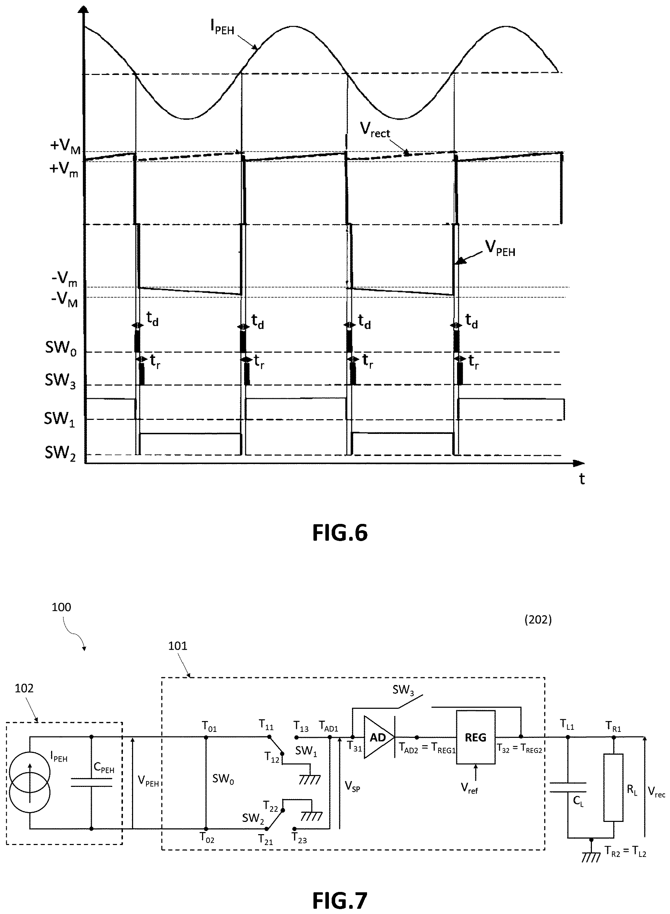

The current I_{PEH} provided by the piezoelectric element 102 and represented in figure 6 over time, is an alternative current. The alternative voltage corresponding to the current I_{PEH} provided by the piezoelectric element 102, that is the voltage V_{PEH} across the piezoelectric element 102, must therefore be rectified to be stored as direct voltage, which is the role of the rectifier according to the invention.

The rectifier 101 according to the invention represented in figures 1 and 2, comprises:
- an active diode AD having a first terminal T_{AD1} and a second terminal TAD2;
- a first switch SW₀ having a first terminal T₀₁ and a second terminal T₀₂;
- a second switch SW₁ having a first terminal T_{11,} a second terminal T₁₂ and a third terminal T₁₃;
- a third switch SW₂ having a first terminal T₂₁, a second terminal T₂₂ and a third terminal T₂₃;
- a regulator circuit REG having a first terminal T_{REG1} and a second terminal T_{REG2};
- a fourth switch SW₃ having a first terminal T₃₁ and a second terminal T₃₂;
- a control circuit configured to control the position of the first switch SW₀, the second switch SW₁, the third switch SW₂ and the fourth switch SW₃, non-represented in figures 1 and 2.

The second switch SW₁ is connected to:
- the first terminal T₀₁ of the first switch SW₀ via its first terminal T₁₁;
- the ground via its second terminal T₁₂;
- the first terminal T_{AD1} of the active diode AD via its third terminal T₁₃.

The third switch SW₂ is connected to:
- the second terminal T₀₂ of the first switch SW₀ via its first terminal T₂₁;
- the ground via its second terminal T₂₂;
- the first terminal T_{AD1} of the active diode AD via its third terminal T₂₃.

The third terminal T₁₃ of the second switch SW₁ is therefore connected to the third terminal T₂₃ of the third switch SW₂ and the first switch SW₀ is therefore connected to:
- the first terminal T₁₁ of the second switch SW₁ via its first terminal T₀₁;
- the first terminal T₂₁ of the third switch SW₂ via its second terminal T₀₂.

The first switch SW₀ and the fourth switch SW₃ are two-terminals switches which can be placed in an open position or in a closed position by the control circuit.

The second switch SW₁ and the third switch SW₂ are three-terminals switches which can be placed in a charging position or in a discharging position by the control circuit.
For the second switch SW₁ and the third switch SW2, in the charging position, the first terminal T_{11,} T₂₁ is connected to the third terminal T₁₃, T₂₃ and in the discharging position, the first terminal T_{11,} T₂₁ is connected to the second terminal T12, T22.

The second switch SW₁ and the third switch SW₂ could be each replaced by two two-terminals switches whose position would be controlled simultaneously by the control circuit.
In this case non-represented in the figures, the second switch SW₁ would be replaced by a first second switch and a second second switch each having a first terminal and a second terminal, and the third switch SW₂ by a first third switch and a third second switch each having a first terminal and a second terminal, and:
- the second terminal of the first second switch and the second terminal of the first third switch would be connected to the first terminal T_{AD1} of the active diode AD;
- the first terminal of the first second switch and the first terminal of the second third switch would be connected to the first terminal T₀₁ of the first switch SWo;
- the first terminal of the second second switch and the first terminal of the first third switch would be connected to the second terminal T₀₂ of the first switch SWo;
- the second terminal of the second third switch and the second terminal of the second second switch would be connected to the ground.

The regulator circuit REG is connected to the second terminal T_{AD2} of the active diode AD via its first terminal T_{REG1}.

In a first embodiment of the invention represented in figure 1, the fourth switch SW₃ is connected to:
- the first terminal T_{AD1} of the active diode AD via its first terminal T₃₁;
- the second terminal T_{REG2} of the regulator circuit REG via its second terminal T₃₂.

In a second embodiment of the invention represented in figure 2, the rectifier 101 further comprises:
- a recycling switch SW_{RCY} having a first terminal T_{SRCY1} and a second terminal T_{SRCY2};
- a recycling capacity C_{RCY} having a first terminal T_{RCY1} and a second terminal T_{RCY2}.

The recycling switch SW_{RCY} is connected to:
- the first terminal T_{RCY1} of the recycling capacity CRCY via its first terminal T_{SRCY1};
- the second terminal T_{AD2} of the active diode AD via its second terminal T_{SRCY2}.

The recycling capacity CRCY is connected to:
- the first terminal T_{SRCY1} of the recycling switch SW_{RCY} and to the second terminal T₃₂ of the fourth switch SW₃ via its first terminal T_{RCY1};
- the ground via its second terminal T_{RCY2}.

In the second embodiment, the fourth switch SW₃ is connected to:
- the third terminal T₂₃ of the third switch SW₂ via its first terminal T₃₁;
- the first terminal T_{RCY1} of the recycling capacity CRCY via its second terminal T₃₂.

The recycling switch SW_{RCY} is a two-terminals switch which can be placed in an open position or in a closed position by the regulator circuit REG.

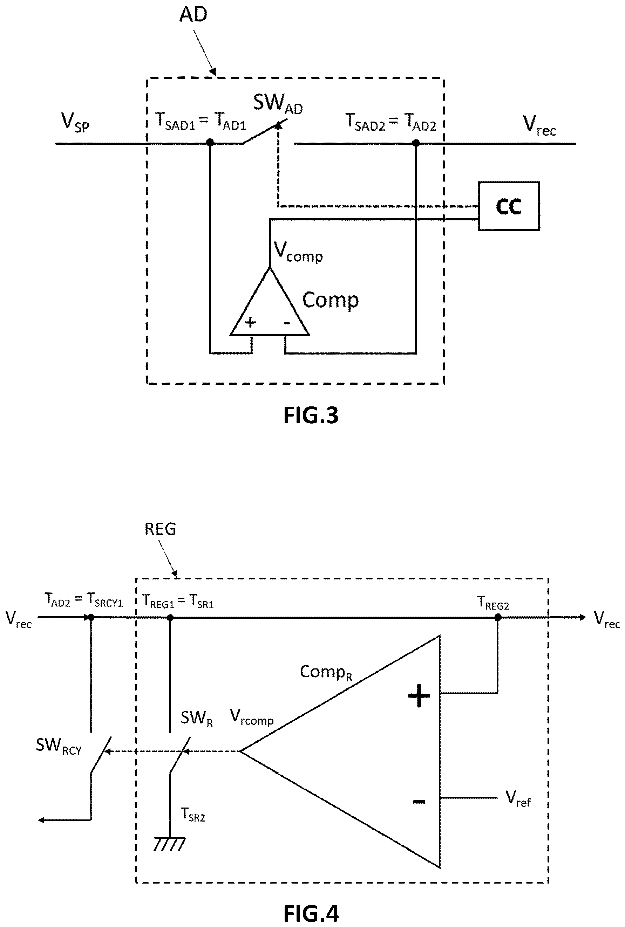

One example of regulator circuit REG is represented in figure 4.

In figure 4, the first terminal T_{REG1} of the regulator circuit REG is connected to the second terminal T_{REG2} of the regulator circuit REG and the regulator circuit REG comprises:
- a regulator switch SW_{R} having a first terminal T_{SR1} and a second terminal T_{SR2};
- a regulator comparator Comp_{R} having a non-inverting input, an inverting input and an output.

The regulator switch SW_{R} is connected to:
- the first terminal T_{REG1} of the regulator switch REG, that is to the second terminal T_{AD2} of the active diode AD, via its first terminal T_{SR1};
- to the ground via its second terminal T_{SR2}.

The regulator comparator Comp_{R} is connected to:
- the second terminal T_{REG2} of the regulator circuit REG via its non-inverting input;
- a reference voltage supply V_{ref} via its inverting input.

The regulator switch SW_{R} is a two-terminals switch which can be placed in an open position or in a closed position by the regulator comparator Comp_{R}.
The regulator comparator Comp_{R} compares the voltage V_{rec} at the second terminal T_{REG2} of the regulator circuit REG and the reference voltage V_{ref.} When the voltage V_{rec} at the second terminal T_{REG2} of the regulator circuit REG becomes superior to the reference voltage V_{ref}, the voltage V_{rcomp} at the output of the regulator comparator Comp_{R} increases.
The voltage V_{rcomp} at the output of the regulator comparator Comp_{R} is used to control the position of the regulator switch SW_{R}, more specifically, the output of the regulator comparator Comp_{R} is configured to place the regulator switch SW_{R} in the closed position when the voltage V_{rec} at the second terminal T_{REG2} of the regulator circuit REG is superior to the reference voltage V_{ref} and to place the regulator switch SW_{R} in the open position when the voltage V_{rec} at the second terminal T_{REG2} of the regulator circuit REG is inferior or equal to the reference voltage V_{ref.}

In the second embodiment of the rectifier 101, as represented in figure 4, the voltage V_{rcomp} at the output of the regulator comparator Comp_{R} is also used to control the position of the recycling switch SW_{RCY}, more specifically, the output of the regulator comparator Comp_{R} is configured to place the recycling switch SW_{RCY} in the closed position when the voltage V_{rec} at the second terminal T_{REG2} of the regulator circuit REG is superior to the reference voltage V_{ref} and to place the recycling switch SW_{RCY} in the open position when the voltage V_{rec} at the second terminal T_{REG2} of the regulator circuit REG is inferior or equal to the reference voltage V_{ref}.

One example of active diode AD is represented in figure 3.

In figure 3, the active diode AD comprises:
- an active diode switch SW_{AD} having a first terminal T_{SAD1} and a second terminal T_{SAD2};
- a comparator Comp having an inverting input, a non-inverting input and an output.

The active diode switch SW_{AD} is connected to the first terminal T_{AD1} of the active diode AD via its first terminal T_{SAD1} or via its second terminal T_{SAD2} and to the second terminal T_{AD2} of the active diode AD via its first terminal T_{SAD1} or via its second terminal T_{SAD2}, the first terminal T_{SAD1} and the second terminal T_{SAD2} not being connected to a same terminal T_{AD1}, T_{AD2} of the active diode AD.

The comparator Comp is connected to:
- the first terminal T_{AD1} of the active diode AD via its non-inverting input;
- the second terminal T_{AD2} of the active diode AD via its inverting input;
- the control circuit CC via its output.

The active diode switch SW_{AD} is a two-terminals switch which can be placed in an open position or in a closed position by the control circuit CC.
The comparator Comp compares the voltage V_{SP} at the first terminal T_{AD1} of the active diode AD and the voltage V_{rec} at the second terminal T_{AD2} of the active diode AD. When the voltage V_{rec} at the second terminal T_{AD2} of the active diode AD becomes superior to the voltage V_{SP} at the first terminal T_{AD1} of the active diode AD, the voltage V_{comp} at the output of the comparator Comp increases and the control circuit CC receives a higher voltage V_{comp} from the comparator Comp. The control circuit CC is then configured to place the active diode switch SW_{AD} in the open position. Otherwise, the control circuit CC is configured to place the active diode switch SW_{AD} in the closed position.

The active diode switch SW_{AD} could be a PMOS switch having a source, a drain and a gate, the first terminal T_{SAD1} of the active diode switch SW_{AD} being the source, the second terminal T_{SAD2} of the active diode switch SW_{AD} being the drain and the gate being connected to the control circuit CC.

A second aspect of the invention relates to a piezoelectric energy harvester comprising the rectifier 101 according to the first aspect of the invention.

As represented in figures 1 and 2, the piezoelectric energy harvester 100 further comprises:
- the piezoelectric element 102;
- a storage capacitor C_{L} having a first terminal T_{L1} and a second terminal TL2;
- a load resistor R_{L} having a first terminal T_{R1} and a second terminal T_{R2}.

The storage capacitor C_{L} is configured to store the voltage V_{PEH} corresponding to the current I_{PEH} provided by the piezoelectric element 102 after rectification by the rectifier 101.
Since C_{L} is a storage capacitor, the value of its capacitance is at least one order of magnitude larger than the value of the capacitance of the inherent piezoelectric capacitor C_{PEH} of the piezoelectric element 102.

The piezoelectric element 102 is connected in parallel with the first switch SW₀, that is to the first terminal T₀₁ of the first switch SW₀ and to the second terminal T₀₂ of the first switch SW₀.

The storage capacitor C_{L} is connected to:
- the second terminal T_{REG2} of the regulator circuit REG via its first terminal T_{L1};
- the ground via its second terminal T_{L2}.

The load resistor R_{L} is connected to:
- the second terminal T_{AD2} of the regulator circuit REG via its first terminal TR1;
- to the ground via its second terminal T_{R2}.

The first terminal T_{L1} of the storage capacitor C_{L} is therefore connected to the first terminal T_{R1} of the load resistor R_{L}.

In the piezoelectric energy harvester 100, the active diode AD is used to prevent current backflow from the storage capacitor C_{L} and to detect the zero-crossing moments of the current I_{PEH} produced by the piezoelectric element 102.
As previously explained, when the voltage V_{rec} at the first terminal T_{AD1} of the active diode AD, that is the voltage across the piezoelectric element 102, becomes superior to the voltage V_{SP} at the second terminal T_{AD2} of the active diode AD, that is the voltage across the regulator circuit REG and therefore across the storage capacitor C_{L}, the voltage V_{comp} at the output of the comparator Comp increases. Consequently, the moment when the voltage V_{comp} at the output of the comparator Comp goes high corresponds to the moment when the current I_{PEH} produced by the piezoelectric element 102 changes direction, i.e. zero crossing.
When the voltage V_{comp} at the output of the comparator Comp goes high, the control circuit CC connected to the output of the comparator Comp places the active diode switch SW_{AD} in the open position and prevents current backflow from the storage capacitor C_{L}.

The regulator circuit REG is configured to regulate the voltage V_{rec} in the storage capacitor C_{L} to prevent it from exceeding a reference voltage V_{ref.}
The reference voltage V_{ref} is for example equal to the maximum no-load voltage across the piezoelectric element 102 obtained when a vibration is applied to the piezoelectric element 102 when it is not connected to the rectifier 101.
As previously explained, when the voltage V_{rec} at the second terminal T_{SAD2} of the regulator circuit REG, that is the voltage at the first terminal T_{L1} of the storage capacitor C_{L} becomes superior to the reference voltage V_{ref}, the voltage V_{rcomp} at the output of the regulator comparator Comp_{R} increases, which is used to place the regulator switch SW_{R} in the closed position, and to place the recycling switch SW_{RCY} in the closed position in the second embodiment of the rectifier 101. Consequently, in the second embodiment of the rectifier 101, when the voltage V_{rec} at the first terminal T_{L1} of the storage capacitor C_{L} becomes superior to the reference voltage V_{ref}, the regulator switch SW_{R} and the recycling switch SW_{RCY} are placed in the closed position by the regulator comparator Comp_{R} via the voltage V_{rcomp} at its output and the voltage V_{rec} across the storage capacitor C_{L} in excess is stored in the recycling capacitor CRCY.

A third aspect of the invention relates to a method for harvesting piezoelectric energy using the piezoelectric energy harvester 100 according to the second aspect of the invention.

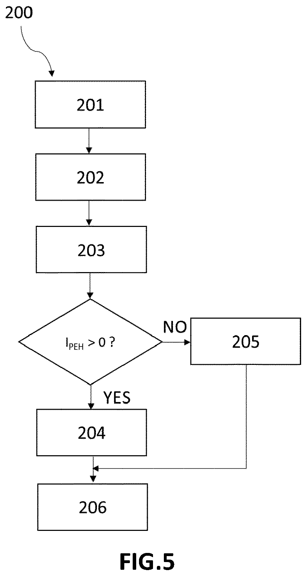

The sequence of the steps of the method 200 according to the invention is represented in figure 5.

A first step 201 of the method 200 consists in detecting the zero-crossing moments of the current I_{PEH} produced by the piezoelectric element 102.
The first step 201 is realized by the active diode AD if the rectifier 101 comprises an active diode AD according to the example represented in figure 3.

The following steps of the method 200 are realized at each zero-crossing moment detected at the first step 201.

A second step 202 of the method 200 consists in:
- putting the second switch SW₁ and/or the third switch SW₂ in the discharging position via the control circuit CC, in such a way that the second switch SW₁ and the third switch SW₂ are both in the discharging position;
- closing the first switch SW₀ via the control circuit CC.

At the end of the second step 202, the second switch SW₁ and the third switch SW₂ are in the discharging position and the first switch SW₀ is closed, which creates a short-circuit of the piezoelectric element 102 and forces the inherent piezoelectric capacitor C_{PEH} to discharge.

In figure 6, one can see that the absolute value of the voltage V_{PEH} across the piezoelectric element 102 decreases to zero as soon as the first switch SW₀ is closed, that is as soon as the voltage across the first switch SW₀ is non-zero.

In figure 7 is represented the piezoelectric energy harvester 100 comprising a rectifier 101 according to the first embodiment, at the end of the second step 202.

A third step 203 of the method 200 is realized after a discharging time t_{d}.
The discharging time t_{d} is for example in the range of a few tens of nanoseconds to 1 microsecond.

The third step 203 consists in:
- opening the first switch SWo;
- closing the fourth switch SW₃;
- checking the sign of the current I_{PEH} produced by the piezoelectric element 102.

If the current I_{PEH} produced by the piezoelectric element 102 is positive, a fourth step 204 is realized.
If the current I_{PEH} produced by the piezoelectric element 102 is negative, a fifth step 205 is realized.

The fourth step 204 consists in putting the second switch SW₁ in the charging position.

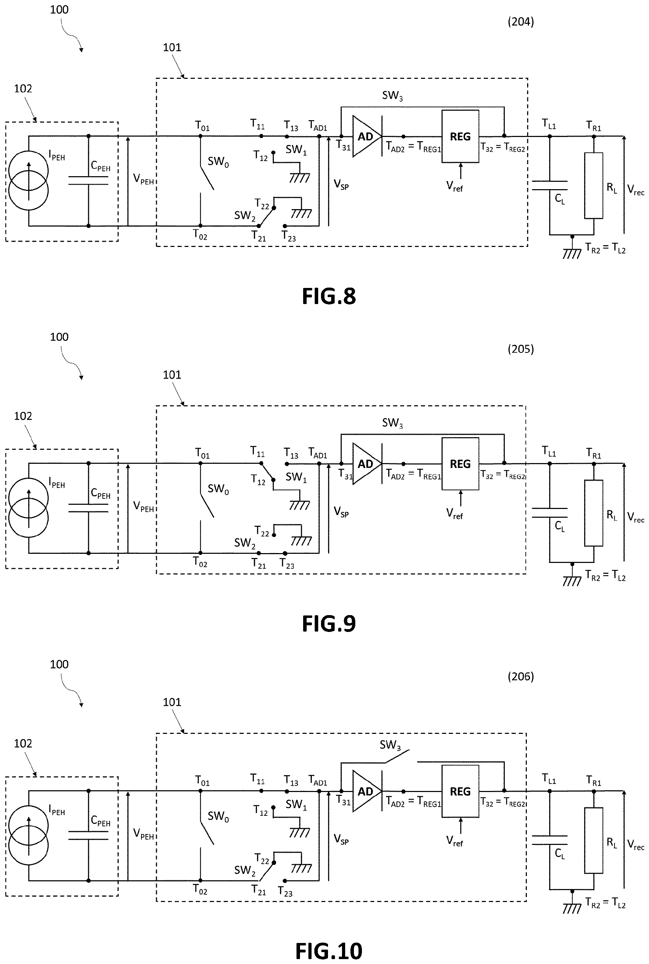

In figure 8 is represented the piezoelectric energy harvester 100 comprising a rectifier 101 according to the first embodiment, at the end of the fourth step 204.

The fifth step 205 consists in putting the third switch SW₂ in the charging position.

In figure 9 is represented the piezoelectric energy harvester 100 comprising a rectifier 101 according to the first embodiment, at the end of the fifth step 205.

At the end of the fourth step 204 if the current I_{PEH} is positive or of the fifth step 205 if the current I_{PEH} is negative, the inherent piezoelectric capacitor CPEH is in parallel with the storage capacitor C_{L} and the active diode AD is short-circuited, which allows charges from the storage capacitor C_{L} to be transferred to the inherent piezoelectric capacitor CPEH.
In figure 6, one can see that the voltage V_{PEH} across the piezoelectric element 102 increases to reach a value +/- Vₘ as soon as the fourth switch SW₃ is closed, that is as soon as the voltage across the fourth switch SW₃ is non-zero, and that the voltage V_{rect} across the storage capacitor C_{L} decreases from a maximum value +V_{M} to a value +Vₘ.

At the end of the fourth step 204, if the current I_{PEH} is positive or of the fifth step 205 if the current I_{PEH} is negative for the piezoelectric energy harvester 100 comprising a rectifier 101 according to the second embodiment, the inherent piezoelectric capacitor CPEH is in parallel with the recycling capacitor CRCY and the active diode AD is short-circuited, which allows charges from the recycling capacitor CRCY to be transferred to the inherent piezoelectric capacitor CPEH.

A sixth step 206 of the method 200 is realized after a recharging time tᵣ.
The recharging time tᵣ is for example in the range of a few hundred nanoseconds to 1 microsecond.

The sixth step 206 consists in opening the fourth switch SW₃.

In figure 10 is represented the piezoelectric energy harvester 100 comprising a rectifier 101 according to the first embodiment, at the end of the sixth step 206 if the current I_{PEH} produced by the piezoelectric element 102 was positive at the third step 203.

At the end of the sixth step 206, the inherent piezoelectric capacitor C_{PEH} is in parallel with the storage capacitor C_{L} but the active diode AD is not short-circuited anymore.
For the active diode AD represented in figure 3, the active diode switch SW_{AD} of the active diode AD is placed in the closed position as soon as the voltage V_{PEH} across the piezoelectric element 102 is higher than the voltage V_{rect} across the storage capacitor C_{L}. As a result, most of the charges delivered by the piezoelectric element 102 are transferred to the storage capacitor C_{L} and to the load resistor R_{L}.

In figure 6, one can see that the absolute value of the voltage V_{PEH} across the piezoelectric element 102 increases gradually from +/- Vₘ to +/- V_{M} as soon as the fourth switch SW₃ is opened, that is as soon as the voltage across the fourth switch SW₃ is equal to zero, and the voltage V_{rect} across the storage capacitor C_{L} also increases gradually from +Vₘ to +V_{M}.

## Claims

1. Rectifier (101) for piezoelectric energy harvesting, **characterized in that** it comprises:
- an active diode (AD) having a first terminal (T_{AD1}) and a second terminal (TAD2);
- a first switch (SW₀) having a first terminal (T₀₁) and a second terminal (T₀₂);
- a second switch (SW₁) having a first terminal (T₁₁), a second terminal (T12) and a third terminal (T₁₃), the first terminal (T₁₁) of the second switch (SW₁) being connected to the first terminal (T₀₁) of the first switch (SWo), the second terminal (T₁₂) of the second switch (SW₁) being connected to the ground and the third terminal (T₁₃) of the second switch (SW₁) being connected to the first terminal (T_{AD1}) of the active diode (AD), the first terminal (T₁₁) of the second switch (SW₁) being connected to the third terminal (T₁₃) of the second switch (SW₁) in a charging position and the first terminal (T₁₁) of the second switch (SW₁) being connected to the second terminal (T₁₂) of the second switch (SW₁) in a discharging position;
- a third switch (SW₂) having a first terminal (T₂₁), a second terminal (T₂₂) and a third terminal (T₂₃), the first terminal (T₂₁) of the third switch (SW₂) being connected to the second terminal (T₀₂) of the first switch (SWo), the second terminal (T₂₂) of the third switch (SW₂) being connected to the ground and the third terminal (T₂₃) of the third switch (SW₂) being connected to the first terminal (T_{AD1}) of the active diode (AD), the first terminal (T₂₁) of the third switch (SW₂) being connected to the third terminal (T₂₃) of the third switch (SW₂) in a charging position and the first terminal (T₂₁) of the third switch (SW₂) being connected to the second terminal (T₂₂) of the third switch (SW₂) in a discharging position;
- a regulator circuit (REG) having a first terminal (T_{REG1}) and a second terminal (TREG2), the first terminal (T_{REG1}) of the regulator circuit (REG) being connected to the second terminal (T_{AD2}) of the active diode (AD);
- either a fourth switch (SW₃) having a first terminal (T₃₁) and a second terminal (T₃₂), the first terminal (T₃₁) of the fourth switch (SW₃) being connected to the first terminal (T_{A1}) of the active diode (AD) and the second terminal (T₃₂) of the fourth switch (SW₃) being connected to the second terminal (T_{REG2}) of the regulator circuit (REG);
- or:
∘ a recycling switch (SW_{RCY}) having a first terminal (T_{SRCY1}) and a second terminal (T_{SRCY2}), the second terminal (T_{SRCY2}) of the recycling switch (SW_{RCY}) being connected to the second terminal (T_{AD2}) of the active diode (AD);
∘ a recycling capacity (CRCY) having a first terminal (T_{RCY1}) and a second terminal (TRCY2), the first terminal (T_{RCY1}) of the recycling capacity (CRCY) being connected to the first terminal (T_{SRCY1}) of the recycling switch (SW_{RCY}) and the second terminal (TR_{CY2}) of the recycling capacity (C_{RCY}) being connected to the ground; and
∘ a fourth switch (SW₃) having a first terminal (T₃₁) and a second terminal (T₃₂), the first terminal (T₃₁) of the fourth switch (SW₃) being connected to the third terminal (T₂₃) of the third switch (SW₂) and the second terminal (T₃₂) of the fourth switch (SW₃) being connected to the first terminal (T_{RCY1}) of the recycling capacity (CRCY);
- a control circuit (CC) configured to control the position of the first switch (SWo), the second switch (SW₁), the third switch (SW₂) and the fourth switch (SW₃).

2. Rectifier (101) according to claim 1, **characterized in that** the active diode (AD) comprises:
- an active diode switch (SW_{AD}) having a first terminal (T_{SAD1}) and a second terminal (T_{SAD2}) being each connected to one different terminal (T_{AD1,} T_{AD2}) of the active diode (AD);
- a comparator (Comp) having:
∘ an inverting input connected to the second terminal (T_{AD2}) of the active diode (AD);
∘ a non-inverting input connected to the first terminal (T_{AD1}) of the active diode (AD); and
∘ an output connected to the control circuit (CC);
the control circuit (CC) being configured to open the active diode switch (SW_{AD}) when the voltage (V_{SP}) at the non-inverting input of the comparator (Comp) is superior to the voltage (V_{rec}) at the inverting input of the comparator (Comp) and to close the active diode switch (SW_{AD}) when the voltage (V_{SP}) at the non-inverting input of the comparator (Comp) is inferior or equal to the voltage (V_{rec}) at the inverting input of the comparator (Comp).

3. Rectifier (101) according to any of the preceding claims, **characterized in that** the first terminal (T_{REG1}) of the regulator circuit (REG) is connected to the second terminal (T_{REG2}) of the regulator circuit (REG) and the regulator circuit (REG) comprises:
- a regulator switch (SW_{R}) having a first terminal (T_{SR1}) and a second terminal (T_{SR2}), the first terminal (T_{SR1}) of the regulator switch (SW_{R}) being connected to the first terminal (T_{REG1}) of the regulator circuit (REG) and the second terminal (T_{SR2}) of the regulator switch (SW_{R}) being connected to the ground;
- a regulator comparator (Comp_{R}) having:
∘ a non-inverting input connected to the second terminal (T_{REG2}) of the regulator circuit (REG);
∘ an inverting input connected to a reference voltage (V_{ref}) supply; and
∘ an output configured to close the regulator switch (SW_{R}) when the voltage (V_{rec}) at the non-inverting input of the regulator comparator (Comp_{R}) is superior to the voltage (V_{ref}) at the inverting input of the regulator comparator (Comp_{R}) and to open the regulator switch (SW_{R}) when the voltage (V_{rec}) at the non-inverting input of the regulator comparator (Comp_{R}) is inferior or equal to the voltage (V_{ref}) at the inverting input of the regulator comparator (CompR).

4. Rectifier (101) according to claim 3, **characterized in that** the output of the regulator comparator (Comp_{R}) is configured to close the recycling switch (SW_{RCY}) when the voltage (V_{rec}) at the non-inverting input of the regulator comparator (Comp_{R}) is superior to the voltage (V_{ref}) at the inverting input of the regulator comparator (Comp_{R}) and to open the recycling switch (SW_{RCY}) when the voltage (V_{rec}) at the non-inverting input of the regulator comparator (Comp_{R}) is inferior or equal to the voltage (V_{ref}) at the inverting input of the comparator (Comp_{R}).

5. Piezoelectric energy harvester (100) comprising:
- a piezoelectric element (102) configured to convert mechanical energy into electrical energy in the form of an alternating current (I_{PEH}) corresponding to an alternating voltage (VPEH);
- a rectifier (101) according to any of the preceding claims, configured to rectify the alternating voltage (V_{PEH}), the piezoelectric element (102) being connected in parallel with the first switch (SWo);
- a storage capacitor (C_{L}) configured to store the rectified voltage, having a first terminal (T_{L1}) and a second terminal (T_{L2}), the first terminal (T_{L1}) of the storage capacitor (C_{L}) being connected to the second terminal (T_{REG2}) of the regulator circuit (REG) and the second terminal (T_{L2}) of the storage capacitor (C_{L}) being connected to the ground, the regulator circuit (REG) being configured to regulate the voltage (V_{rec}) in the storage capacitor (CL);
- a load resistor (R_{L}), having a first terminal (T_{R1}) and a second terminal (T_{R2}), the first terminal (T_{R1}) of the load resistor (R_{L}) being connected to the second terminal (T_{REG2}) of the regulator circuit (REG) and the second terminal (T_{R2}) of the load resistor (R_{L}) being connected to the ground.

6. Piezoelectric energy harvester (100) according to claim 5 comprising a rectifier (101) according to claim 3 or 4, **characterized in that** the reference voltage (V_{ref}) is equal to a maximum no-load voltage across the piezoelectric element (102).

7. Method (200) for harvesting piezoelectric energy using the piezoelectric energy harvester (100) according to any of claim 5 or 6, comprising the following steps:
- Detect the zero-crossing moments of the current (I_{PEH}) produced by the piezoelectric element (102, 201);
- When a zero-crossing moment is detected:
∘ Via the control circuit (CC), put the second switch (SW₁) and/or the third switch (SW₂) in the discharging position, and close the first switch (SWo, 202);
∘ At the end of a discharging time (t_{d}), open the first switch (SW₀) and close the fourth switch (SW₃) via the control circuit (CC), and check the sign of the current (I_{PEH}) produced by the piezoelectric element (102, 203):
▪ If the current (I_{PEH}) produced by the piezoelectric element (102) is positive, put the second switch (SW₁) in the charging position via the control circuit (CC, 204);
▪ If the current (I_{PEH}) produced by the piezoelectric element (102) is negative, put the third switch (SW₂) in the charging position via the control circuit (CC, 205);
∘ At the end of the recharging time (tᵣ), open the fourth switch (SW₃) via the control circuit (CC, 206).
